# EUROPEAN PATENT SPECIFICATION

(11) **EP 1 523 208 B1**
(45) Date of publication and mention of the grant of the patent: **30.08.2006**
(21) Application number: 03292228.8
(22) Date of filing: 11.09.2003
(51) Int. Cl.: H04Q 7/38

(54) **Registration of a dual mode terminal in a cellular and a WLAN network**
Anmeldung eines Dualmodusendgerätes in einem zellularen Netzwerk und einem WLAN Netzwerk
Enregistrement d'un terminal radiotéléphonique bimode dans un réseau cellulaire et un réseau de type WLAN

(43) Date of publication of application: 13.04.2005
(73) Proprietor: ALCATEL, 75008 Paris (FR)
(72) Inventor: Maillard, Hervé, 91430 Igny (FR); Jaupitre, Gaelle, 75015 Paris (FR)
(74) Representative: Rausch, Gabriele

(56) References cited:
- WO-A-00/01187
- WO-A-98/59513
- US-A- 6 073 015
- CHIA S T S: "LOCATION REGISTRATION AND PAGING IN A THIRD GENERATION MOBILE SYSTEM" BRITISH TELECOM TECHNOLOGY JOURNAL, LONDON, GB, vol. 9, no. 4, 1 October 1991 (1991-10-01), pages 61-68, XP000613149

## Description

### Field of the invention

The present invention relates to the field of telecommunication, and more particularly without limitation, to dual mode telecommunication methods and systems.

### Background and prior art

Wireless local area network (WLAN) is a promising technology that can be used as a complement technology to UMTS/GPRS at hot-spots to provide high bandwidth and low costs. However the efficient integration of WLAN and UMTS/GPRS is still an open question. Various approaches for WLAN/GPRS integration have been considered in "Mobility management for an integrated network platform" by Kuladinithi, K.; Konsgen, A.; Aust, S.; Fikouras, N.; Gorg, C., Mobile and Wireless Communications Network, 2002. 4th International Workshop, pages 621-625; and "Experimentation of TCP schemes over GPRS & WLAN" by Leang Tzeh Yeu; Liew, J.; Seah, W.K.G., Mobile and Wireless Communications Network, 2002, 4th International Workshop, pages 234-238.

WO-A-0001187 shows a dual-mode communication system made up of an AMPS network and a GSM network provides for communication to and from dual-mode terminals equipped with corresponding SIM cards. For authentication purposes, the dual-mode system uses the SIM-based electronic serial number for key-based authentication in the AMPS network.

United States Patent 6073015 discloses a method and apparatus for facilitating communications with a roaming mobile subscriber unit which roams beyond a microcellular communication network, such as a Digital Electronic Cordless Telephone (DECT) system. A mobility server of the microcellular communication networks is coupled to a macrocellular communication network, such as a Global System for Mobile communications (GSM) network. Wide-area mobility management functions of the macrocellular communication network are used to facilitate call routing to and from the roaming, mobile subscriber unit.

One open issue is the provisioning of packet switch based services over heterogeneous networks constituted of both WLAN and UMTS/GPRS.

### Summary of the invention

The present invention provides for a telecommunication method for first and second wireless networks which are coupled. Initial network registration of a mobile terminal with the first wireless network (i.e. the way a mobile terminal is initially recognized by the network) is performed based on an application layer identifier, such as a permanent identifier, in particular the MSISDN of the mobile terminal.

For example, the MSISDN of a particular user can have an assigned service description which specifies GPRS and WLAN services for this user. The MSISDN is allocated to the user as part of a subscription process.

Network registration - in other words "hooking" a mobile terminal to a network to be able to establish a communication link - of the mobile terminal with the second wireless terminal is performed by means of a network layer identifier which is assigned to the mobile terminal by the second network. For example the network layer identifier is a temporary identifier, such as a temporary IP address, in particular a WLAN IP address. Note that "application and network level" terms refer to OSI layered model.

Typically application layer identifier for registration with the first wireless network is stored on non-volatile storage within the mobile terminal, e.g. on the subscriber identity module (SIM) card. After the mobile terminal has obtained its network level identifier from the second wireless network it sends its network level identifier to the first wireless network for storage in a mapping table in conjunction with the application level identifier. This mapping table is used for routing of a telecommunication link from a data source to a mobile terminal.

When the mobile terminal moves outside the hot-spot coverage provided by the second wireless network it sends a corresponding message to the first wireless network such that the temporary identifier which is stored in the mapping table is invalidated. This way it is ensured that no attempt is made to route a telecommunication link to the mobile terminal through the second wireless network, which would fail in this instance. As the mobile terminal itself informs the first wireless network that it has left the hot-spot hand-off latency is drastically reduced.

In accordance with a further preferred embodiment of the invention the packet data gateway (PDG) is used for mapping of the application layer identifier to the network layer identifier. The packet data gateway is specified in 3GPP TS 23.234 "3GPP system to wireless local area network (WLAN) interworking". In this instance the MSISDN of the mobile terminal is sent to the packet data gateway as part of the registration procedure. As the packet data gateway performs the assignment of a WLAN IP address to the mobile terminal it has knowledge of this address and thus performs the mapping of the MSISDN to the WLAN IP address.

In accordance with a further preferred embodiment of the invention an authorization authentication accounting (AAA) server is used to perform the mapping.

In accordance with a further preferred embodiment of the invention the instance which performs the binding of the two networks selects one of the networks to establish a communication link when both networks are available to provide such a communication link to the mobile terminal. This selection can be based on any criterion, such as load balancing or security level.

In accordance with a further preferred embodiment of the invention the unit performing the MSISDN / GPRS IP address mapping is reused to perform the MSISDN / WLAN IP address mapping in accordance with the present invention.

### Brief description of the drawings

In the following preferred embodiments of the invention are described by way of example by making reference to the drawings in which:
- Figure 1: is a block diagram of a telecommunication system having coupled wireless networks,
- Figure 2: is illustrative of a flow chart of a registration method,
- Figure 3: is illustrative of a flow chart of a routing method.

### Detailed description

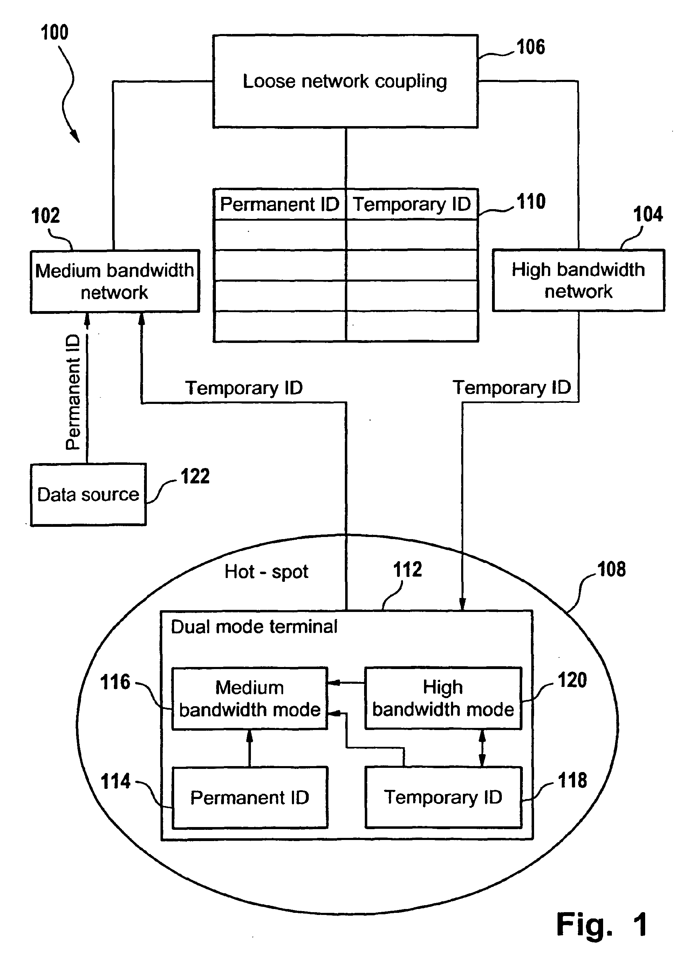

Figure 1 shows telecommunication system 100 which has medium bandwidth wireless network 102 and high bandwidth wireless network 104. Medium bandwidth network 102 and high bandwidth 104 are coupled by means of network coupling component 106. Preferably network coupling component 106 implements a loose network coupling architecture.

Medium bandwidth network 102 provides global coverage whereas high bandwidth network 104 provides coverage for hot-spot 108. Hot-spot 108 is located within the coverage of medium bandwidth network 102.

Network coupling component 106 is connected to storage 110. Storage 110 stores a mapping table for mapping of permanent identifiers to temporary identifiers for the purposes of routing. This will be explained in more detail in the following.

Wireless dual mode terminal 112 is within the coverage of medium bandwidth network 102 and within hot-spot 108. Dual mode terminal 112 has non-volatile memory 114 for storage of a permanent identifier. For example non-volatile memory 114 is a SIM card which is inserted in a card reader of dual mode terminal 112. In this instance the MSISDN, i.e. the telephone number of dual mode terminal 112 can serve as the permanent identifier. Alternatively the IMSI can be used.

Dual mode terminal 112 has component 116 for operation in medium bandwidth mode. Component 116 is coupled to non-volatile memory 114 for reading of the permanent identifier from non-volatile memory 114.

Dual mode terminal 112 has memory 118 which can be a volatile or non-volatile memory for storage of a temporary identifier. Further dual mode terminal 112 has component 120 for operation in high bandwidth mode. Component 120 is coupled to memory 118 for writing and reading of the temporary identifier.

In operation dual mode terminal 112 registers with medium bandwidth network 102 on the basis of it's permanent identifier stored in non-volatile memory 114. The corresponding registration procedure is performed by component 116.

Further dual mode terminal 112 registers with high bandwidth network 104 when it is within hot-spot 108. During the registration procedure high bandwidth network 104 assigns a temporary identifier to dual mode terminal 112 which is stored by component 120 in memory 118. When the registration procedure of dual mode terminal 112 with high bandwidth network 104 is complete and the temporary identifier has been stored in memory 118 this is signalled from component 120 to component 116.

In response component 116 reads the temporary identifier from memory 118 and sends it to medium bandwidth network 102. Medium bandwidth network 102 sends the permanent identifier and the temporary identifier of dual mode terminal 112 to network coupling component 106 which stores the permanent identifier and the temporary identifier in the mapping table of storage 110.

When data source 122 wants to send data to dual mode terminal 112, such as multi media data, data source 122 provides the permanent identifier of dual mode terminal 112 to medium bandwidth network 102. Medium bandwidth network 102 forwards the permanent identifier to network coupling component 106 in order to check whether a valid temporary identifier is available in storage 102 for the permanent identifier provided by the data source 122.

In other words the mapping table of storage 110 is checked for the presence of the permanent identifier and a corresponding temporary identifier. If no temporary identifier is stored in storage 110 for the permanent identifier this is signalled from network coupling component 106 to medium bandwidth network 102 and a medium bandwidth communication link is established between data source 122 and dual mode terminal 112 via medium bandwidth network 102.

If network coupling component 106 retrieves a temporary identifier for the permanent identifier provided from data source 122 from the mapping table stored in storage 110, the temporary identifier is provided from network coupling component 106 to high bandwidth network 104 and a high bandwidth communication link is formed between high bandwidth network 104 and dual mode terminal 112 for transmission of data from data source 122 over network coupling component 106 and high bandwidth network 104 to dual mode terminal 112. In one application a so called MMS-message is transmitted this way from data source 122 to dual mode terminal 112.

When dual mode terminal 112 is moved outside hot-spot 108 this is recognised by component 120 as coverage from high bandwidth network 104 is lost. This is signalled from component 120 to component 116 which in response sends a message to medium bandwidth network 102 which indicates that dual mode terminal 112 is outside the coverage of high bandwidth network 104. This is possible due to the fact that medium bandwidth network 102 provides global coverage outside hot-spot 108.

In response to the message received from dual mode terminal 112 medium bandwidth network 102 sends a command to network coupling component 106 for the invalidation of the temporary identifier which is stored in storage 110.

It is important to note that dual mode terminal 112 and not high bandwidth network 104 initiates the invalidation of the temporary identifier stored in storage 110. This way it is ensured that the temporary identifier within storage 110 is invalidated with minimal latency. Hence when data source 122 wants to send data to dual mode terminal 112 no unnecessary attempt is made to form a communication link via high bandwidth network 104 as the move of dual mode terminal 112 outside hot-spot 108 is immediately reflected in storage 110.

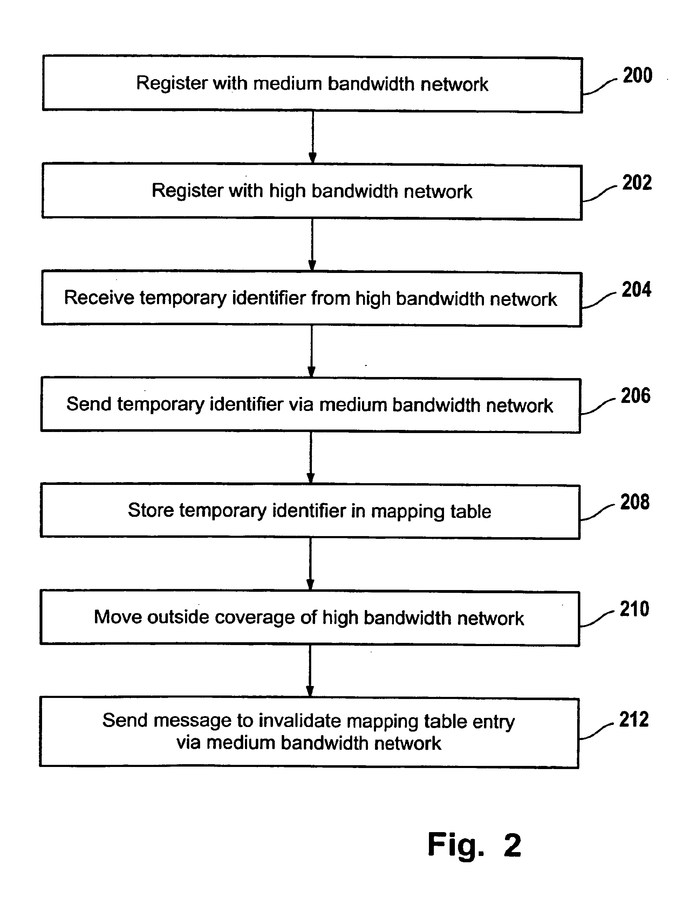

Figure 2 shows a corresponding flow chart. In step 200 the wireless dual mode terminal registers with the medium bandwidth network. This is done by means of the permanent identifier of the dual mode terminal. In step 202 the dual mode terminal registers with the high bandwidth network when it is within the hot-spot coverage. As part of the registration procedure dual mode terminal receives a temporary identifier from the high bandwidth network in step 204.

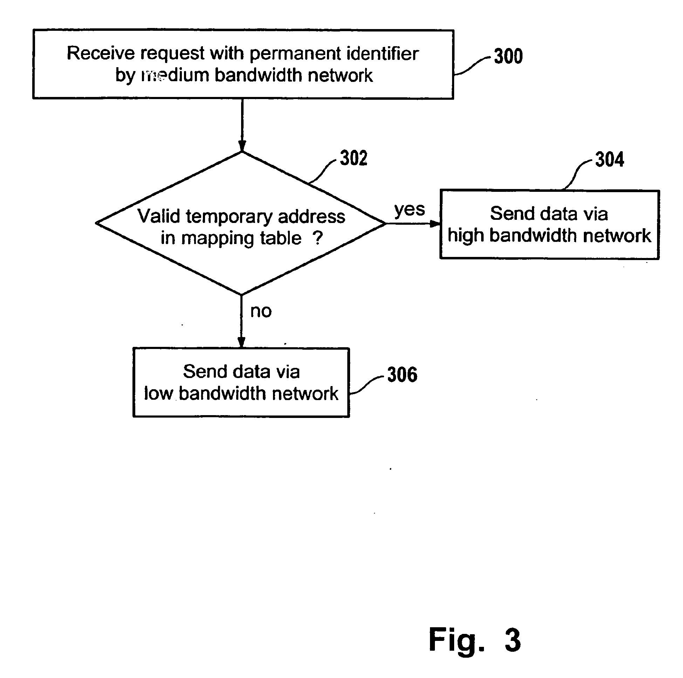

In step 206 the dual mode terminal sends the temporary identifier to the medium bandwidth network. The temporary identifier is stored in the mapping table for the purposes of routing of communication links to the dual mode terminal. The routing will be explained in more detail with respect to figure 3.

When the dual mode terminal moves outside the coverage of the high bandwidth network in step 210 a message is sent from the dual mode terminal to the medium bandwidth network in order to indicate that the dual mode terminal is outside the coverage of the high bandwidth network (step 212). In response the temporary identifier stored in the mapping table is invalidated.

Figure 3 shows a corresponding routing method. In step 300 a request is received by the medium bandwidth network to establish a communication link to a mobile terminal. The mobile terminal is identified in the request by it's permanent identifier. In step 302 it is checked whether a valid temporary address is stored for the permanent identifier in the mapping table. If this is the case a communication link is formed via the high bandwidth network to the mobile terminal in order to send the data (step 304). If the contrary is the case a communication link is formed via the medium bandwidth network (step 306).

It is to be noted that the present invention is particularly suitable for integrationof GPRS medium bandwidth networks and WLAN high bandwidth networks. In this instance the MSISDN is used as the application layer identifier and the WLAN IP Address is used as the network layer identifier. However the present invention is not limited to any particular network standard but is broadly applicable to telecommunication systems having at least two wireless networks one of which providing global coverage.

In the case of GPRS/WLAN integration the temporary identifier can be transmitted from the mobile terminal to the GPRS medium bandwidth network by means of the IP protocol. Likewise the mobile terminal can inform the GPRS medium bandwidth network concerning its move outside the hot-spot coverage by means of an IP protocol message.

Alternatively the mobile terminal sends a packet data protocol (PDP) context activation request as a signalling message to the GPRS medium bandwidth network. The PDP context activation request contains the temporary IP address which has been assigned to the mobile terminal by the WLAN high bandwidth network. The PDP context activation address contains an access point name (APN) which is assigned to the mapping table.

When the SGSN receives the PDP context activation request it identifies the IP address of the mapping table by means of a domain name server (DNS) on the basis of the APN of the mapping table. The SGSN then forwards the temporary IP address of the mobile terminal as well as its MSISDN to the mapping table over IP protocol. Likewise the temporary IP address is invalidated in the mapping table by sending of a PDP context deactivation request from the mobile terminal to the GPRS medium bandwidth network.

### List of Reference Numerals

- 100: telecommunication system
- 102: medium bandwidth network
- 104: high bandwidth network
- 106: network coupling component
- 108: hot-spot
- 110: Storage
- 112: dual mode terminal
- 114: non-volatile memory
- 116: Component
- 118: Memory
- 120: component
- 122: data source

## Claims

1. A telecommunication method for first and second wireless networks (102, 104) being coupled, the method comprising the steps of:
- registration (200) of a mobile terminal (112) with the first wireless network (102) by means of an application layer identifier as a permanent identifier [MSISDN], the first wireless network (102) providing coverage for a first region,
- registration (202) of the mobile terminal with the second wireless network (104) by means of a network layer identifier as a temporary identifier, the second wireless network providing coverage for a second region,
- storing (208) of the application layer identifier in conjunction with the network layer identifier for routing of a telecommunication link from a data source (122) to the mobile terminal (112),
- providing (300) of the application layer identifier from the data source (122) to the first wireless network (102), and
- obtaining (302) the network layer identifier on the basis of the application layer identifier for establishing the telecommunication link (304) to the mobile terminal via the second network (104),
**characterised in that**
- a unit (106) for performing a MSISDN / GPRS IP address mapping is reused to perform the MSISDN / WLAN IP address mapping,
- the first network is a cellular-type medium bandwidth network (102) and the second network is a WLAN-type higher bandwidth network (104),
- the mobile terminal (112) and not the high bandwidth network (104) initiates an invalidation of the temporary identifier, which is stored in a mapping table, by sending a message (212) from the mobile terminal (112) to the first network (102) in order to indicate that the mobile terminal has been moved (210) outside the second region (108), such that the temporary identifier is invalidated.

2. A telecommunication system (100) comprising:
- a first wireless network (102) providing coverage for a first region, the first wireless network having registration means for registering (200) a mobile terminal (112) by means of an application layer identifier as a permanent identifier [MSISDN],
- a second wireless network (104) providing coverage for a second region (108), the second wireless network (104) having registration means for registration of the mobile terminal by means of a network layer identifier as a temporary identifier,
- a network coupling component (106) for coupling the first and second wireless networks,
- storage (110) for storing the application layer identifier in conjunction with the network layer identifier for routing of a telecommunication link from a data source (122) to the mobile terminal,
- means for providing (300) of the application layer identifier from the data source (122) to the first wireless network (102), and
- means for obtaining (302) the network layer identifier on the basis of the application layer identifier for establishing the telecommunication link (304) to the mobile terminal via the second network,
**characterised by**
- a unit (106) for performing a MSISDN / GPRS IP address mapping being reused as unit for performing the MSISDN /WLAN IP address mapping,
- the first network (102) being a cellular-type medium bandwidth network and the second network (104) being a WLAN-type higher bandwidth network, and
- means for an invalidation of the temporary identifier, which is stored in a mapping table, following initiation by a message (212) sent from the mobile terminal to the first network, the message indicating that the mobile terminal has been moved (210) outside the second region (108).

3. The telecommunication system (100) of claim 2, wherein a packet data gateway [PDG] receives from the mobile terminal (112) a network layer identifier known from the second network (104), that enables to retrieve the application layer identifier [MSISDN] by mapping of the application layer identifier to the network layer identifier.

4. A mobile terminal (112) for use with first and second wireless networks (102, 104) being coupled, the wireless mobile terminal (112) comprising:
- means (116, 114) for registration with the first wireless network (102) by means of an application layer identifier as a permanent identifier [MSISDN], the first wireless network providing coverage for a first region,
- means (120, 118) for registration with the second wireless network (104) by means of a network layer identifier as a temporary identifier, the second wireless network providing coverage for a second region (108), and
- means for establishing a telecommunication link (304) to the mobile terminal from a data source (122), the data source having provided (300) the application identifier to the first wireless network (102) for obtaining the network layer identifier on the basis of the application layer identifier, the application layer identifier having been stored (208) in conjunction with the network layer identifier for routing of the telecommunication link to the mobile terminal via the second network (102),
**characterised by**
- means for initiating an invalidation of the temporary identifier, which is stored in a mapping table, by sending a message (212) from the mobile terminal (112) to the first network (102) in order to indicate that the mobile terminal has been moved outside the second region (108), such that the temporary identifier is invalidated.

## Patentansprüche

1. Ein Telekommunikationsverfahren für das erste und das zweite Funknetz (102, 104), die gekoppelt sind, wobei das Verfahren die Schritte umfaßt:
- Anmeldung (200) eines mobilen Endgerätes (112) mit dem ersten Funknetz (102) mittels einer Anwendungsschichtkennung als eine permanente Kennung [MSISDN), wobei das erste Funknetz (102) die Versorgung für ein erstes Gebiet bereitstellt,
- Anmeldung (202) des mobilen Endgerätes mit dem zweiten Funknetz (104) mittels einer Vermittlungsschichtkennung als eine temporäre Kennung, wobei das zweite Funknetz die Versorgung für ein zweites Gebiet bereitstellt,
- Speichern (208) der Anwendungsschichtkennung zusammen mit der Vermittlungsschichtkennung für das Routing einer Telekommunikationsverbindung von einer Datenquelle (122) an das mobile Endgerät (112),
- Bereitstellen (300) der Anwendungsschichtkennung von der Datenquelle (122) an das erste Funknetz (102), und
- Erhalten (302) der Vermittlungsschichtkennung auf der Basis der Anwendungsschichtkennung zum Aufbauen der Telekommunikationsverbindung (304) zu dem mobilen Endgerät über das zweite Netz (104),
**dadurch gekennzeichnet, daß**
- eine Einheit (106) zum Durchführen eines MSISDN/GPRS. IP-Adreßmappings wiederverwendet wird, um das MSISDN/WLAN-IP-Adreßmapping durchzuführen,
- das erste Netz ein zellulares Netz mittlerer Bandbreite (102) und das zweite Netz ein WLAN-Netz (104) hoher Bandbreite ist,
- das mobile Endgerät (112) und nicht das Netz hoher Bandbreite (104) eine Annullierung der temporären Kennung auslöst, die in einer Mapping-Tabelle gespeichert ist, durch Senden einer Nachricht (212) von dem mobilen Endgerät (112) an das erste Netz (102), um darauf hinzuweisen, daß sich das mobile Endgerät (210) außerhalb des zweiten Gebietes (108) bewegt hat, so daß die temporäre Kennung ungültig gesetzt ist.

2. Ein Telekommunikationssystem (100), umfassend:
- ein erstes Funknetz (102), das die Versorgung für ein erstes Gebiet bereitstellt, wobei das erste Funknetz Anmeldungseinrichtungen zum Anmelden (200) eines mobilen Endgerät (112) mittels einer Anwendungsschichtkennung als eine permanente Kennung [MSISDN] aufweist,
- ein zweites Funknetz (104), das die Versorgung für ein zweites Gebiet (108) bereitstellt, wobei das zweite Funknetz (104) Anmeldungseinrichtungen für die Anmeldung des mobilen Endgerätes mittels einer Vermittlungsschichtkennung als eine temporäre Kennung aufweist,
- eine Netzkopplungskomponente (106) zum Koppeln des ersten und des zweiten Funknetzes,
- Speicher (110) zum Speichern der Anwendungsschichtkennung zusammen mit der Vermittlungsschichtkennung für das Routing einer Telekommunikationsverbindung von einer Datenquelle (122) zu dem mobilen Endgerät,
- Einrichtungen zum Bereitstellen (300) der Anwendungsschichtkennung von der Datenquelle (122) an das erste Funknetz (102), und
- Einrichtungen zum Erhalten (302) der Vermittlungsschichtkennung auf der Basis der Anwendungsschichtkennung zum Aufbauen der Telekommunikationsverbindung (304) zu dem mobilen Endgerät über das zweite Netz,
**gekennzeichnet durch**
- eine Einheit (106) zum Durchführen eines MSISDN/GPRS-IP-Adreßmappings, die als Einheit zum Durchführen des MSISDN/WLAN-IP-Adreßrnappings wiederverwendet wird,
- das erste Netz (102), das ein zellulares Netz mittlerer Bandbreite ist, und das zweite Netz (104), das ein WLAN-Netz höherer Bandbreite ist, und
- Einrichtungen für eine Annullierung der temporären Kennung, die in einer Mapping-Tabelle gespeichert ist, nach der Auslösung **durch** eine Nachricht (212), die Von dem mobilen Endgerät an das erste Netz gesendet wurde, wobei die Nachricht darauf hinweist, daß sich das mobile Endgerät (210) außerhalb des zweiten Gebietes (108) bewegt hat.

3. Telekommunikationssystem (100) nach Anspruch 2, in welchem ein Paketdatengateway [PDG] von dem mobilen Endgerät (112) eine Vermittlungsschichtkennung empfängt, die von dem zweiten Netz (104) bekannt ist, das ermöglicht, die Anwendungsschichtkennung [MSISDN] durch Mapping der Anwendungsschichtkennung auf die Vermittlungsschichtkennung abzufragen.

4. Ein mobiles Endgerät (112) zur Verwendung mit dem ersten und dem zweiten Funknetz (102, 104), die gekoppelt sind, wobei das schnurlose mobile Endgerät (112) umfaßt:
- Einrichtungen (116, 114) für die Anmeldung mit dem ersten Funknetz (102) mittels einer Anwendungsschichtkennung als eine permanente Kennung [MSISDN], wobei das erste Funknetz die Versorgung für ein erstes Gebiet bereitstellt,
- Einrichtungen (120, 118) für die Anmeldung mit dem zweiten Funknetz (104) mittels einer Vermittlungsschichtkennung als eine temporäre Kennung, wobei das zweite Funknetz die Versorgung für ein zweites Gebiet (108) bereitstellt, und
- Einrichtungen zum Aufbauen einer Telekommunikationsverbindung (304) zu dem mobilen Endgerät von einer Datenquelle (122), wobei die Datenquelle (300) die Anwendungskennung an das erste Funknetz (102) bereitstellt, um die Vermittlungsschichtkennung auf der Basis der Anwendlugsschichtkennung zu erhalten, wobei die Anwendungsschichtkennung (208) zusammen mit der Vermittlungsschichtkennung gespeichert wird, um die Telekommunikationsverbindung an das mobile Endgerät über das zweite Netz (102) zu leiten,
**gekennzeichnet durch**
- Einrichtungen zum Auslösen einer Annullierung der temporären Kennung, die in einer Mapping-Tabelle gespeichert ist, **durch** Senden einer Nachricht (212) von dem mobilen Endgerät (112) an das erste Netz (102), um darauf hinzuweisen, daß sich das mobile Endgerät außerhalb des zweiten Gebietes (108) bewegt hat, so daß die temporäre Kennung ungültig gesetzt ist.

## Revendications

1. Procédé de télécommunication pour des premier et deuxième réseaux sans fil (102, 104) qui sont couplés, le procédé comprenant les étapes consistant à :
enregistrer (200) un terminal mobile (112) avec le premier réseau sans fil (102) au moyen d'un identifiant de couche d'application comme un identifiant permanent [RNISSM], le premier réseau sans fil (102) fournissant une couverture pour une première zone,
enregistrer (202) le terminal mobile avec le deuxième réseau sans fil (104) au moyen d'un identifiant de couche de réseau comme un identifiant temporaire, le deuxième réseau sans fil fournissant une couverture pour une deuxième zone,
stocker (208 de l'identifiant de couche d'application conjointement avec l'identifiant de couche de réseau pour acheminer une liaison de télécommunication depuis une source de données (122) vers le terminal mobile (112),
fournir (300) l'identifiant de couche d'application depuis la source de données (122) au premier réseau sans fil (102), et
obtenir (302) l'identifiant de couche de réseau en fonction de l'identifiant de couche d'application pour établir la liaison de télécommunication (304) vers le terminal mobile par l'intermédiaire du deuxième réseau (104),
**caractérisé en ce que**
une unité (106) destinée à réaliser une mise en correspondance de RNISSM/adresse IP GPRS est réutilisée pour réaliser la mise en correspondance de RNISSM/adresse TP WLAN,
le premier réseau est un réseau à largeur de bande moyenne de type cellulaire (102) et le deuxième réseau est un réseau à largeur de bande supérieure de type WLAN (104),
le terminal mobile (112) et non le réseau à largeur de bande élevée (104) initie une invalidation de l'identifiant temporaire, qui est stocké dans une table de mise en correspondance, en envoyant un message (212) depuis le terminal mobile (112) vers le premier réseau (102) pour indiquer que le terminal mobile a été déplacé (210) à l'extérieur de la deuxième zone (108), de sorte que l'identifiant temporaire est invalidé.

2. Système de télécommunication (100) comprenant :
un premier réseau sans fil (102) fournissant une couverture pour une première zone, le premier réseau sans fil comprenant des moyens d'enregistrement destinés à enregistrer (200) un terminal mobile (112) au moyen d'un identifiant de couche d'application comme un identifiant permanent [RNISSM],
un deuxième réseau sans fil (104) fournissant une couverture pour une deuxième zone (108), le deuxième réseau sans fil (104) comprenant des moyens d'enregistrement destinés à enregistrer le terminal mobile au moyen d'un identifiant de couche réseau comme un identifiant temporaire,
un composant de couplage de réseau (106) destiné à coupler les premier et deuxième réseaux sans fil,
un stockage (110) destiné à stocker l'identifiant de couche d'application conjointement avec l'identifiant de couche de réseau pour acheminer une liaison de télécommunication depuis une source de données (122) vers le terminal mobile,
des moyens destinés à fournir (300) l'identifiant de couche d'application depuis la source de données (122) au premier réseau sans fil (102), et
des moyens destinés à obtenir (302) l'identifiant de couche de réseau en fonction de l'identifiant de couche d'application pour établir la liaison de télécommunication (304) vers le terminal mobile par l'intermédiaire du deuxième réseau,
**caractérisé en ce que**
une unité (106) destinée à réaliser une mise en correspondance de RNISSM/adresse IP GPRS est réutilisée pour réaliser la mise en correspondance de RNISSM/adresse IP WLAN,
le premier réseau (102) est un réseau à largeur de bande moyenne de type cellulaire et le deuxième réseau (104) est un réseau à largeur de bande supérieure de type WLAN,
des moyens pour une invalidation de l'identifiant temporaire, qui est stocké dans une table de mise en correspondance, à la suite de l'initiation par un message (212) envoyé depuis le terminal mobile vers le premier réseau, le message indiquant que le terminal mobile a été déplacé (210) à l'extérieur de la deuxième zone (108).

3. Système de télécommunication (100) selon la revendication 2, dans lequel une passerelle de données de paquet [PDG] reçoit en provenance du terminal mobile (112) un identifiant de couche de réseau connu depuis le deuxième réseau (104), qui permet d'extraire l'identifiant de couche d'application [RNISSM] en mettant en correspondance l'identifiant de couche d'application avec l'identifiant de couche de réseau.

4. Terminal mobile (112) destiné à être utilisé avec des premier et deuxième réseaux sans fil (102, 104) qui sont couplés, le terminal mobile sans fil (112) comprenant :
des moyens (116, 114) pour l'enregistrement avec le premier réseau sans fil (102) au moyen d'un identifiant de couche d'application comme un identifiant permanent [RNISSM], le premier réseau sans fil fournissant une couverture pour une première zone,
des moyens (120, 118) pour l'enregistrement avec le deuxième réseau sans fil (104) au moyen d'un identifiant de couche de réseau comme un identifiant temporaire, le deuxième réseau sans fil fournissant une couverture pour une deuxième zone (108), et
des moyens destinés à établir une liaison de télécommunication (304) vers le terminal mobile depuis une source de données (122), la source de données ayant fourni (300) l'identifiant d'application au premier réseau sans fil (102) pour obtenir l'identifiant de couche de réseau en fonction de l'identifiant de couche d'application, l'identifiant de couche d'application ayant été stocké (208) conjointement avec l'identifiant de couche de réseau pour acheminer la liaison de télécommunication vers le terminal mobile par l'intermédiaire du deuxième réseau (102),
**caractérisé par**
des moyens destinés à initier une invalidation de l'identifiant temporaire, qui est stocké dans une table de mise en correspondance, en envoyant un message (212) depuis le terminal mobile (112) vers le premier réseau (102) pour indiquer que le terminal mobile a été déplacé à l'extérieur de la deuxième zone (108), de sorte que l'identifiant temporaire est invalidé.
